(19) Europäisches Patentamt / European Patent Office / Office européen des brevets

(11) **EP 3 883 828 B1**

(12) **EUROPEAN PATENT SPECIFICATION**

(45) Date of publication and mention
of the grant of the patent:
**16.10.2024 Bulletin 2024/42**

(21) Application number: **19828220.4**

(22) Date of filing: **21.11.2019**

(51) International Patent Classification (IPC):
**B60T 8/88** *(2006.01)*      **B60T 8/171** *(2006.01)*

(52) Cooperative Patent Classification (CPC):
**B60T 8/885; B60T 8/171**

(86) International application number:
**PCT/EP2019/025412**

(87) International publication number:
**WO 2020/104067 (28.05.2020 Gazette 2020/22)**

(54) **MONITORING BRAKE PERFORMANCE OF A MACHINE**

ÜBERWACHUNG DER BREMSLEISTUNG EINER MASCHINE

CONTRÔLE DE PERFORMANCE DE FREINAGE D'UNE MACHINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.11.2018 GB 201819080**

(43) Date of publication of application:
**29.09.2021 Bulletin 2021/39**

(73) Proprietor: **Caterpillar SARL
1208 Geneva (CH)**

(72) Inventors:
• **DE HASETH, Andrew**
**Peoria, Illinois 61629-9510 (US)**
• **LATHAN, Raymond**
**Peoria, Illinois 61629-9510 (US)**
• **SONO, Shinya**
**Peoria, Illinois 61629-9510 (US)**
• **MACDONALD, Ian**
**Peoria, Illinois 61629-9510 (US)**
• **MENOLD, Rodney**
**Peoria, Illinois 61629-9510 (US)**
• **SCHWARTZ, Thimothy**
**Peoria, Illinois 61629-9510 (US)**
• **WISLEY, David**
**Peoria, Illinois 61629-9510 (US)**

(74) Representative: **Novagraaf Group
Chemin de l'Echo 3
1213 Onex / Geneva (CH)**

(56) References cited:
**WO-A1-2016/030699      CA-A1- 2 297 741
US-A1- 2018 281 768**

EP 3 883 828 B1

**Description**

Background

The present invention relates to monitoring the brake performance of a machine and a system for performing such monitoring. In some aspects, the machine is an autonomous machine and the monitoring is performed to monitor the brake system of the autonomous machine and/or to schedule/perform maintenance on the autonomous machine.

Brake systems of machines are typically configured to provide a predetermined brake performance. The predetermined brake performance may, for example, be a measure of the distance and/or time required by the brake system to bring a machine from a predetermined speed to a halt. Machines are typically required to meet certain standards of braking performance based upon certain conditions, such as when braking on a certain inclination, when the machine has a certain load and the like. Such machines may include hauling machines, such as dump trucks, off-highway trucks, on-highway lorries/trucks, mining trucks, articulated haulers, earth-moving machines, such as backhoes, loaders, dozers, shovels, motor graders, wheel tractor scrapers, excavators and other such vehicles.

It may be desirable to continuously monitor the brake performance of a brake system during its operation and over time. A common approach is to perform visual, static checks on the brake system to determine whether it meets certain criteria, such as a predetermined brake pad wear or the like. Alternatively, US-B1-6332354 discloses determining the effectiveness of a vehicle brake system. Vehicle mass is manually or automatically measured, brake system pressure is measured during deceleration of the vehicle, road slope is measured and air friction and engine friction of the vehicle is measured. A predicted deceleration of the vehicle is calculated based upon data representing these parameters under comparable circumstances. Brake effectiveness is calculated using the predicted deceleration and a measured actual deceleration. However, further improvements may be required to improve the accuracy and reliability of brake performance determinations.

WO2016030699 relates to a method for monitoring the braking performance of a vehicle. The method includes, for at least some of the braking events: determining a braking demand; determining vehicle deceleration; defining a first data set of braking events, wherein each braking event in the data set includes a determined braking demand and a determined vehicle deceleration; applying a statistical trend analysis method to the data set to generate a vehicle deceleration and braking demand trend; providing a vehicle deceleration and braking demand reference; and comparing at least one trend value with at least one reference value. Apparatus for implementing the method is also disclosed.

US2018281768 relates to a method of monitoring aircraft brake performance and apparatus for performing such a method. A brake performance monitoring system operates by an energy differential calculated from brake demand energy and energy absorbed during a braking operation. A significant differential would be reported as a possible problem with the braking system.

Summary

The present invention provides a method of monitoring brake performance of a brake system of a machine according to the method claim 1. The brake system providing for decelerating the machine. In the method, a brake engagement is detected when the brake is activated to decelerate the machine. Once the brake engagement is detected, data associated with the performance of the brake system, such as the rate of deceleration, time to bring the machine to a stop, and/or the like may be measured.

In embodiments of the present invention, the rotation of the wheels of the machine are monitored during the braking of the machine to detect whether any of the machine's wheels stop rotating, such as during a wheel lock/skid. If the rotation of at least one of the machine's wheels is detected during the deceleration/braking of the machine and before the machine has been brought to a stop, then the braking event is processed as an invalid braking event, wherein the data collected for the braking event is rejected or the generation of brake performance data associated with the brake engagement is prevented. Data from braking events in which a wheel lock/skid is not detected is used to analyse the performance of the machine's brake system. In this way, braking event data associated with a random variable, a wheel lock/skid, is not used in the brake system monitoring.

The present invention further provides a system comprising a machine that includes a brake system and a control system for monitoring the brake performance of the brake system according to the apparatus claim 13.

The control system detects a brake engagement for decelerating the machine monitors the wheels of the machine for a wheel lock of at least one wheel of the machine during the brake engagement. If a wheel lock resulting from the brake engagement whilst the machine is moving is detected, a signal is sent to the control system and in response to detection of the wheel lock the performance data associated with the brake engagement is rejected or the generation of brake performance data associated with the brake engagement is prevented.

In embodiments of the present invention in which the machine is undergoing a test braking event, e.g., the machine's brake system is being activated to analyse the performance of the brake system, the brake system may be deactivated and a new braking event may be performed and data collected. For autonomous machines, the occurrence of a wheel lock and a geographical location of the machine when the wheel lock occurred may be used to identify locations to be used for testing the machine's brake system.

In embodiments of the present invention, the braking event data collected from braking events in which no wheel lock occurred is used by the control system to analyse the performance of the machines brake system. This analysed braking performance data may be used to: control the machine's brake system in subsequent braking events; schedule maintenance of the machine's brake system; and/or trigger a warning of brake system malfunction.

The present invention provides a computer readable medium storing computer executed instructions for performing the method set out in the present invention. The method of the present invention may comprise operating the control system to perform the method.

Brief Description of the Drawings

By way of example only, embodiments of a method and system of the present invention are now described with reference to, and as shown in, the accompanying drawings, in which:

Figure 1 is a schematic representation of an embodiment of a system according to the present invention;
Figure 2 is a schematic representation of an embodiment a machine of the system of Figure 1;
Figure 3 is a flowchart of an embodiment of a method according to the present invention;
Figure 4 is a graph illustrating brake performance against brake engagements over time;
Figure 5 is a flowchart of a further embodiment of a method according to the present invention;
Figure 6 is a graph illustrating a machine speed against a distance travelled during a brake engagement; and
Figure 7 is a flowchart of a further embodiment of a method according to the present invention;

Detailed Description

The ensuing description provides preferred exemplary embodiment(s) only, and is not intended to limit the scope, applicability or configuration of the invention. Rather, the ensuing description of the preferred exemplary embodiment(s) will provide those skilled in the art with an enabling description for implementing a preferred exemplary embodiment of the invention, it being understood that various changes may be made in the function and arrangement of elements, without departing from the scope of the invention, as defined by the claims. Specific details are given in the following description to provide a thorough understanding of the embodiments. However, it will be understood by one of ordinary skill in the art that embodiments may be practised without these specific details. For example, well-known circuits, processes, algorithms, structures, and techniques may be shown without unnecessary detail in order to avoid obscuring the embodiments.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function. Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

It is to be understood that the following invention provides many different embodiments, or examples, for implementing different features of various embodiments. Specific examples of components and arrangements are described below to simplify the present invention.

These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact.

The present invention generally relates to monitoring the performance of a brake system of a machine and systems comprising control systems configured to perform such methods. The brake performance may be determined based upon a predicted deceleration and a measured deceleration during a brake engagement. The predicted deceleration may take account of the rolling resistance and windage losses of the machine. The brake performance data may be filtered to exclude data resulting from brake engagements in which a skid occurs. The performance may be monitored by identifying substantial changes or increases in rates of change of the brake performance over a longer time-period. The performance may also be assessed and/or analysed further by determining a brake delay between the operator instructing a brake engagement and the brake system actually engaging.

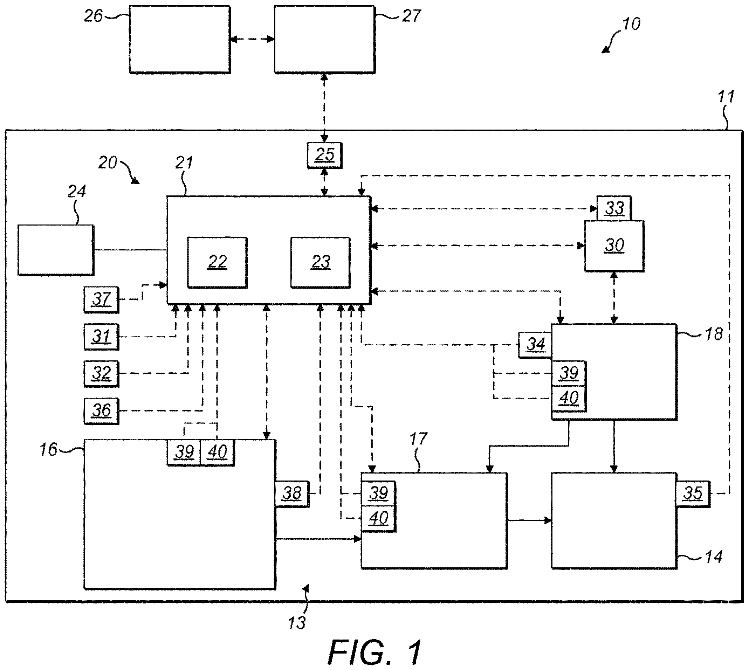

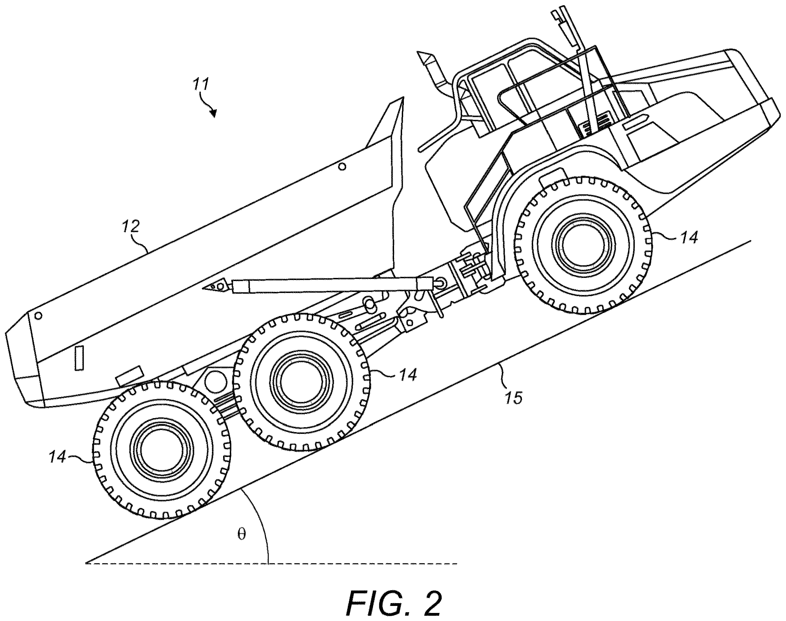

Figure 1 illustrates an embodiment of a system 10 of the present invention comprising a machine 11, which is illustrated in further detail in Figure 2. The machine 11 may be any type of machine or vehicle, such as the illustrated articulated hauler. In other embodiments, the machine 11 may comprise any other type of hauling machine or vehicle (i.e. configured predominantly for transporting bulk material), work and/or material handling machine or vehicle (i.e. configured to perform work), such as a dump truck, off-highway truck, on-highway lorry/truck, mining truck, articulated hauler, backhoe, loader, dozer, shovel, wheel tractor scraper, drilling machine, motor grader, forestry machine, excavator and the like. The machine 11 may comprise at least one work tool 12 for performing work, such as a dump body as illustrated, a bucket, shears, a fork, hammer, plow, handling arm, multi-processor, pulveriser, saw, shears, blower, grinder, tiller, compactor, trencher, winch, auger, blade, broom, cutter, planer, delimber, felling head, grapple, mulcher, ripper, rake or the like.

The machine 11 may comprise an engine system 13 configured to drive at least one wheel 14 to move the machine 11 across a terrain 15. The at least one wheel 14 may drive tracks attached thereto or the like. The engine system 13 may comprise at least one power unit 16 (e.g. an internal combustion engine, electric motor and/or hydraulic motor) configured to drive a powertrain 17. The powertrain 17 may comprise at least one transmission, torque converter, transfer gear, output shaft, axle or the like for transferring power from the engine system 13 to drive the at least one wheel 14.

The machine 11 comprises a brake system 18. The brake system 18 may be for decelerating the machine 11 as it moves across the terrain 15. The brake system 18 may be of any suitable type, such as an air brake system or a hydraulic brake system, and may be configured to selectively apply a braking force to the at least one wheel 14 and/or powertrain 17. The brake system 18 may comprise at least one pad, at least one rotor, at least one drum, at least one piston and/or the like. In the case of an air brake system, it may comprise an air distribution system, including a brake chamber, containing pressurised air for controlling the application of the brake system 18. In addition to the brake system 18, the machine 11 may comprise alternative means for reducing its speed, such as an engine braking system or a hydraulic retarder.

The system 10 comprises a control system 20, which may be configured to perform the methods of the present invention. The control system 20 may comprise a controller 21, which may comprise a memory 22, which may store instructions or algorithms in the form of data, and a processing unit 23, which may be configured to perform operations based upon the instructions. The controller 21 may be of any suitable known type and may comprise an engine control unit (ECU) or the like. The memory 22 may comprise any suitable computer-accessible or non-transitory storage medium for storing computer program instructions, such as RAM, SDRAM, DDR SDRAM, RDRAM, SRAM, ROM, magnetic media, optical media and the like. The processing unit 23 may comprise any suitable processor capable of executing memory-stored instructions, such as a microprocessor, uniprocessor, a multiprocessor and the like. The controller 21 may further comprise a graphics processing unit for rendering objects for viewing on a display 24 of the control system 20. The controller 21 may also be in communication with least one machine communication module 25 for transferring data with an external computing system 26 via a wired or wireless network 27 (such as Ethernet, fibre optic, satellite communication network, broadband communication network, cellular, Bluetooth). The external computing system 26 may comprise computing systems, processors, servers, memories, databases, control systems and the like.

The controller 21 may be communicatively connected (via a wired or wireless connection) to the power unit 16, powertrain 17 and/or brake system 18 for providing control signals thereto and receiving sensor signals therefrom in order to control the operation of the machine 11. The controller 21 may communicate with at least one input device, such as the display 24, a joystick, a button and a brake input 30, for receiving an input and controlling the machine 11. As illustrated, a brake input 30, which may comprise a brake pedal, may be in communication with the controller 21 and/or brake system 18 for controlling the actuation and engagement of the brake system 18 to decelerate the machine 11.

The controller 21 may receive operating condition data indicative of at least one operating condition of the machine 11 by being communicatively coupled with at least one sensor and/or with the power unit 16, powertrain 17 and/or brake system 18. The controller 21 may process the received operating condition data to determine further operating condition data and may store the operating condition data on the memory 22. The at least one operating condition and operating condition data may comprise at least one of:

- An inclination $\theta$ of the machine 11 relative to the direction of the gravitational force (as shown in Figure 2). The control system 20 may comprise an inclination sensor 31 for determining the inclination $\theta$ of the machine 11 on the terrain 15 in two or three dimensions;

- A position of the machine 11. The control system 20 may comprise a navigation system 32, for example comprising a position sensor for determining position via a global navigation satellite system, for determining the position of the machine 11;

- A brake input 30 actuation, which may include the force applied to the brake input 30. The machine 11 may comprise a brake input sensor 33, which may comprise a pedal position sensor, for determining whether the brake input 30 has been actuated by an operator;

- A pressure within the brake system 18, which may be indicative of the engagement of the brake system 18. The control system 20 may comprise brake system pressure sensor 34 for determining the brake system pressure;

- A wheel speed of at least one wheel 14. The control system 20 may comprise at least one wheel speed sensor 35 for determining the wheel speed;

- A mass of the machine 11, which may be the load or weight of the machine 11 and any payload being transported by the machine 11. The mass may be input by an operator via at least one input device, stored on the memory 22 and/or estimated based upon a payload estimator 36. The payload estimator 36 may comprise at least one load sensor for detecting the mass of a payload carried by the machine 11;

- An acceleration or deceleration of the machine 11. The control system 20 may comprise an inertial measurement unit 37 (IMU) and/or may utilise the wheel speed sensor 35 for determining the acceleration;

- A machine speed of the machine 11, which may be determined via the IMU 37, the at least one wheel speed sensor 35, a powertrain speed sensor (such as an engine speed sensor 38) and/or the navigation system 32;

- An engine speed, which may be the rotational velocity of at least one output shaft of the at least one power unit 16 of the machine 11. The control system 20 may comprise the engine speed sensor 38 for determining the engine speed;

- A transmission ratio of the transmission of the powertrain 17. The transmission ratio may be determined based upon a demanded transmission ratio sent from the controller 21 to the powertrain 17 and/or a transmission ratio sensor within the powertrain 17; and/or

- Oil temperatures of oil in contact with at least one rotating component of the engine system 13, powertrain 17, or brake system 18 and rotational speeds of at least one rotating component. The oil may be lubricating and/or cooling oil. The control system 20 may comprise at least one oil temperature sensor 39 and at least one engine system component speed sensor 40 for determining the oil temperatures and rotational speeds.

The IMU 37 may comprise the inclination sensor 31. The inclination $\theta$ may be determined based upon the outputs of the IMU 37 and at least one wheel speed sensor 35. In particular, the acceleration or deceleration of the at least one wheel 14 may be determined via the at least one wheel speed sensor 35 and the inclination $\theta$ determined by accounting for such acceleration or deceleration of the at least one wheel 14 in the output of the IMU 37.

The operating condition data collected by the control system 20 may be transferred to the external computing system 26, which may perform the method of the present invention.

Thus the control system 20 may be considered in the present invention to comprise the external computing system 26, which may have instructions stored thereon for performing the methods disclosed herein in a similar manner to the controller 21.

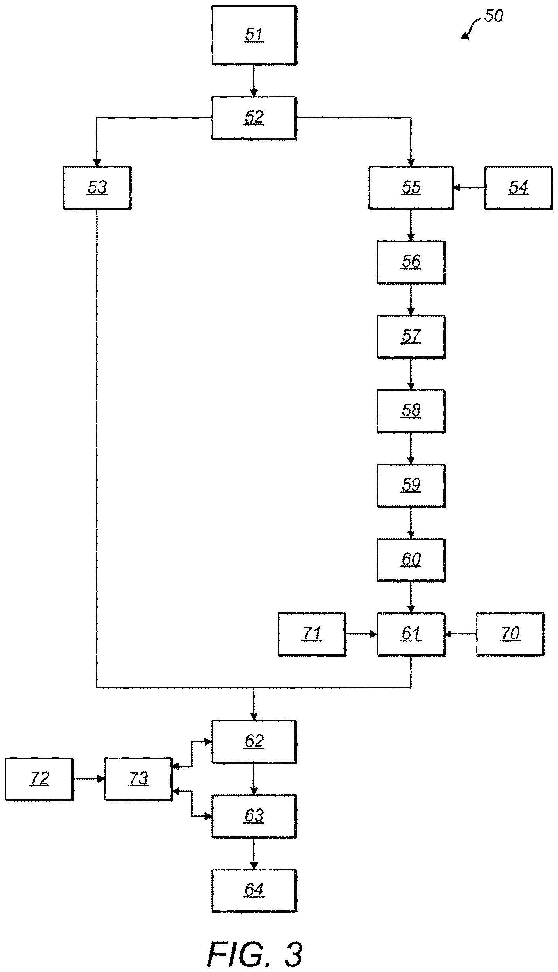

Figure 3 illustrates a method 50 of monitoring the brake performance of the brake system 18 of the system 10 of the present invention. The brake performance may be indicative of the effectiveness of the brake system 18 at slowing the machine 11 upon engagement of the brake system 18, such as the distance or time required to bring the machine 11 to a halt from a predetermined speed. The brake performance may vary throughout the lifecycle of the brake system 18, such as due to standard wear of components such as brake pads. The brake performance may be assessed substantially continuously during the normal operation of the machine 11 by the control system 20. The brake performance may be determined by the control system 20 by determining an actual deceleration (AD) and a predicted deceleration (PD) of the machine 11 during a brake engagement. In particular, the brake performance (BP) may be determined as a value:

$$BP = AD\ /\ PD$$

The operator may apply the brake system 18 via the brake input 30 at step 51. The control system 20 may initially detect a resulting brake engagement at step 52. The brake engagement or brake event may be a single instance of application of the brake system 18 to slow the machine 11. The brake engagement may be detected based upon the operating condition data from at least one of the brake input sensor 33, at least one brake system pressure sensor 34 and/or at least one wheel speed sensor 35 indicating that the brake system 18 has been engaged. The brake engagement may be detected based upon the operating condition data from a plurality of wheel speed sensors 35 in order to improve accuracy and account for instances where, for example, different axles to which each wheel is attached being operating at lower speeds due to operation of a differential in the powertrain 17. The brake engagement may also be detected based upon the operating condition data from a brake system pressure sensor 34 located in the brake system 18 at or close to the brake input 30 for detecting the application at the brake input 30 by the operator and/or from a brake system pressure sensor 34 located in the brake system 18 at or close to the at least one wheel 14, such as in fluid actuating a brake calliper or piston, for detecting the application by the brake system 18 to slow the at least one wheel 14. The control system 20 may also determine that the engine brake and/or hydraulic retarder are engaged, which would invalidate the brake performance data, the control system 20 may reject or not generate the brake performance data.

The control system 20 may determine the actual deceleration of the machine 11 during the brake engagement at step 53. The actual deceleration may be determined based upon deceleration data received at the controller 21 from the IMU 37 and/or wheel speed sensor 35 during the brake engagement.

The predicted deceleration may be determined by the control system 20 based upon at least one operating condition of the brake system 18 measured during the brake engagement and a brake map stored on the memory 22 of the control system 20. The brake map may comprise a table, graph or the like storing data for enabling the calculation of the predicted deceleration based upon the at least one brake system operating condition. The brake map may be populated from test data obtained from operating the machine 11 or a similar machine 11 during testing at a predetermined (e.g. optimum or 100%) brake performance, such as when the brake system 18 is fully serviced with unworn components. The method 50 may comprise generating the brake map from test data at step 54. The test data may indicate the braking force (BF) associated with actual measured deceleration (AMD) of the machine 11, mass (M) of the machine 11, brake system operating condition (BSOC) and a constant (k) indicating the relationship between the brake system operating condition and the braking force:

$$BF = BSOC \times k = AMD \times M$$

The brake map may comprise a plurality of such values at a plurality of brake system operating conditions. The brake system operating condition may comprise the brake system pressure from at least one brake system pressure sensor 34 (which may be located in the brake system 18 at or close to the brake input 30 for detecting the application at the brake input 30 by the operator), the force applied to the brake pedal from the brake input sensor 33, the position of the brake pedal from the brake input sensor 33 (which may have a direct relationship with the brake system pressure) and/or the like. The brake map may provide values for a combination of different brake system operating conditions.

In order to determine the predicted deceleration the method 50 may comprise retrieving the brake map from the memory 22 at step 55. The method 50 may comprise receiving, at the control system 20, data indicative of at least one brake system operating condition during the brake engagement at step 56 and the mass at step 57. The control system 20 may determine, based upon the brake map, the braking force corresponding to the measured brake system operating condition and mass at step 58. The control system 20 may determine, based upon the output from the inclination sensor 31 (which may be the IMU 37) and the wheel speed sensor 35, the inclination θ of the machine 11 at step 59. The control system 20 may determine, at step 60, the drag forces (DF) acting on the machine 11, such as aerodynamic drag and engine friction. The drag forces may be estimated from various operating parameters measured during the brake engagement such as the machine speed, engine rotating speed and power unit output torque. As a result, predicted deceleration may be determined at step 61 based upon the brake map, at least one brake system operating condition, mass, inclination θ and drag forces as (where *g* is gravitational force):

$$PD = \left(BF/M\right) - \left(g \times \sin\theta\right) - \left(DF/M\right)$$

In alternative embodiments the predicted deceleration may not take into account the drag forces and/or inclination θ. Further alternatively, the predicted deceleration may instead be based upon a value provided by an operator via at least one input and/or based upon a minimum acceptable deceleration stored in the memory 22.

The control system 20 may determine the brake performance at step 62 and store the brake performance for the brake engagement as brake performance data on its memory 22 at step 63. The brake performance data may be communicated to the external computing system 26 via the network 27. If the brake performance falls below a minimum brake performance threshold an alert may be provided to the operator via the display 24, a light or the like at step 64. The control system 20 may repeat method 50 continuously by continuing to collect brake performance data for a plurality of brake engagements during the normal operation of the machine 11 and store them as brake performance data on the memory 22 for later retrieval, processing and/or display 24.

The control system 20 may determine a parasitic loss decelerating the machine 11 during the brake engagement. The parasitic loss may comprise an estimated rolling resistance and/or estimated windage losses. As a result, the control system 20 may account for additional forces acting in the deceleration of the machine 11 in addition to the brake system 18.

The control system 20 may also estimate the rolling resistance of the machine 11 during the brake engagement or just prior to the brake engagement and determine the brake performance based upon the estimated rolling resistance. The rolling resistance may comprise energy losses resulting from contact between the terrain 15 and the at least one wheel 14, such as due to deformation of the at least one wheel 14 and/or terrain 15.

The rolling resistance may be estimated based upon at least one operating condition of the machine 11 measured before the brake engagement and/or during the brake engagement. The rolling resistance may be calculated a plurality of times along a plurality of positions and/or continuously along a route of travel of the machine 11 and may be calculated using any suitable known method. The rolling resistance may be estimated based upon an estimated driving force $F_{drive}$ of the machine 11, inclination data from the inclination sensor 31 and/or from the IMU 37. The estimated driving force $F_{drive}$ may be an estimation or calculation of the force applied by the machine 11 where the at least one wheel 14 and/or track contacts the terrain 15 in order to move the machine 11. The estimated driving force $F_{drive}$ may be determined from lookup tables stored on the memory 22 based upon at least one operating condition. The estimated driving force $F_{drive}$ may be determined based upon an estimated driving torque or engine power driving the at least one wheel 14, which may be determined from the engine speed, transmission ratio, powertrain efficiency and the like, and the known radius of the at least one wheel 14.

An effective inclination $\theta_{eff}$ may be estimated based upon the estimated driving force $F_{drive}$ using:

$$F_{drive} = m \times g \times \sin\theta_{eff}$$

The effective inclination $\theta_{eff}$ may comprise the actual inclination $\theta_{act}$ of the machine 11 and an estimated rolling resistance inclination $\theta_{RR}$:

$$\theta_{eff} = \theta_{act} + \theta_{RR}$$

$\theta_{act}$ may be determined based upon the inclination data from the inclination sensor 31 and/or from the IMU 37 and the wheel speed sensor 35, and, as a result, the estimated rolling resistance inclination $\theta_{RR}$ determined. The estimated rolling resistance inclination $\theta_{RR}$ may therefore be used as an indication of the rolling resistance experienced by the machine 11.

Alternatively, the rolling resistance may be estimated from a map indicating the estimated rolling resistance of the terrain 15 across which the machine 11 travels. The map may be generated by estimating the rolling resistance as the machine 11 and other machines 11 travel over the terrain 15 prior to the brake engagement. The map may store the estimate of rolling resistance as estimated rolling resistance inclinations $\theta_{RR}$. The control system 20 may retrieve the map from its memory 22 and or via the network 27, locate the machine 11 on the map via the navigation system 32 and subsequently retrieve the corresponding rolling resistance.

The brake performance may be determined by incorporating the expected deceleration resulting from the estimated rolling resistance into the calculation of the brake performance at step 61. The estimated rolling resistance may be determined at step 70 and may be incorporated using the effective inclination $\theta_{eff}$. The result is that the predicted deceleration may be determined as follows (optionally including the drag forces):

$$PD = \left(BF/M\right) - \left(g \times \sin\theta_{eff}\right) - \left(DF/M\right)$$

The brake performance may subsequently be calculated as disclosed above based upon this predicted deceleration incorporating the rolling resistance and an alert provided to an operator should the brake performance exceed a threshold value.

The control system 20 may also estimate the windage losses of the machine 11 during the brake engagement and determine the brake performance based upon the estimated windage losses. The windage losses may be in rotating components (e.g. shafts, gears, clutches) of the engine system 13 (in at least one of the powertrain 17, including axles, torque converter, transmission thereof or the power unit 16), brake system 18 or any other rotating components of the machine 11 in contact with oil. The oil may be brake cooling oil, gear lubricating oil, hydraulic oil and the like. The windage losses may comprise energy losses resulting from, for example, oil in the powertrain 17 thrown against the rotating components and/or wind generated within the powertrain 17 due to the rotation of such components. The viscosity of the oil, and therefore the temperature of the oil, may therefore affect the windage losses. In particular, during warmup of the engine system 13, the oil may increase in temperature such that the windage losses vary. Such variations may be amplified in heavier machines 11 with heavier weight oil around the rotating components. The control system 20 may account for such variations in windage losses in order to improve the accuracy of the brake performance assessment.

In particular, the control system 20 may store windage loss data on the memory 22 representing the power loss due to windage losses at a plurality of oil temperatures and a plurality of rotational speeds of the rotating components. The windage loss data may be collected by testing the rotating components at the plurality of oil temperatures and rotational speeds and determining the associated power loss.

The control system 20 may be configured to determine at least one oil temperature and at least one rotational speed of at least one rotating component during the brake engagement from at least one oil temperature sensor 39 and at least one engine system component speed sensor 40. Therefore, the control system 20 may at step 71 estimate the associated power loss based upon the at least one oil temperature, at least one rotational speed and the windage loss data. In particular, the control system 20 may estimate the power loss resulting from a plurality of rotating components by measuring each of their associated oil temperatures and rotational speeds. The resulting windage braking force (WBF) decelerating the machine 11 may be determined based upon the estimated power loss (PL), the wheel speed (WS) and the known wheel radius ($R_w$), which may be stored on the memory 22:

$$WBF = {PL}/{(WS \times R_w)}$$

The resulting deceleration (DW) due to windage losses may therefore be determined as:

$$DW = {WBF}/{M} = {PL}/{(WS \times R_w \times M)}$$

The result is that the predicted deceleration may be determined as follows at step 61 (optionally including the drag forces and the rolling resistance):

$$PD = \left({BF}/{M}\right) - \left(g \times \sin\theta_{eff}\right) - \left({DF}/{M}\right) - DW$$

The brake performance may subsequently be calculated as disclosed above based upon this predicted deceleration incorporating the windage losses and an alert provided to an operator should the brake performance exceed a threshold value.

The control system 20 may determine that windage loss in all or part of the powertrain 17 should not be taken into account in determining predicted deceleration when the windage loss in all or part of the powertrain 17 will not affect the deceleration. In particular, if the transmission is in neutral such that no power is transferred the control system 20 may only account for the windage loss between the decoupling point of the transmission (e.g. a clutch or torque converter) and the at least one wheel 14. Thus, if decoupling between components in the powertrain 17 is detected the control system 20 may at step 71 estimate the associated power loss based upon the at least one oil temperature, at least one rotational speed and the windage loss data only for the at least one component of the powertrain 17 between the decoupling and the at least one wheel 14. The rest of the method may be as discussed above. Whether a decoupling has occurred may be detected by at least one powertrain speed sensor and/or other sensor for determining whether components are coupled or decoupled in the powertrain 17.

The control system 20 may also determine brake performance accounting for brake engagements in which at least one rejection condition occurs. The at least one rejection condition may be a skid in which at least one wheel 14 locks or stops rotating whilst the machine 11 continues to move along the terrain 15.

Therefore, the method 50 may comprise at step 72 detecting that a skid has occurred during the brake engagement. For a multi-wheel machine, a skid comprises at least one of the wheels of the multi-wheel machine ceasing to rotate while the machine is moving forward. Such a skid invalidates all-of the data associated with a braking event, even though one or more of the machine's wheels of the machine may be turning, because the skid introduces a variable regarding the deceleration of the machine that is not related to the effectiveness/operation of the brake system. Consequently, all data determined for a braking event in which a skid of one or more wheels of the machine is detected is rejected or brake performance data associated with the braking event may be prevented from being generated and the data is not used for analysing brake performance/status.

Skidding may be detected using any suitable method or apparatus, such as a known anti-lock brake system (ABS). Skidding may be detected based upon the output from the IMU 37 indicating that the machine 11 is decelerating and the output from the at least one wheel speed sensor 35 indicating that the wheels are not rotating during the brake engagement. When a determination that at least one wheel has stopped turning during a braking event, all-of the data measured during the braking event is rejected or brake performance data associated with the braking event may be prevented from being generated, even data associated with wheels that kept rotating, and the braking event data is not processed. In some embodiments, there may be a threshold value for an amount of time that a wheel must cease turning before an event is categorized as a skid since in off road operations conditions may be such that the majority of braking events may involve some amount of skidding by the machine. In some embodiments, where a skid comprises a wheel ceasing to rotate for a matter of seconds or less, a skid factor may be applied to the overall skid event data to normalise the data for the detected skid or an indicator may be associated with the data indicating a short skid occurred during the braking event. Since the machine comprises multiple wheels, data associated with a skidding wheel cannot simply be nulled or removed from the braking event data.

The method 50 comprises, at step 73, rejecting brake performance data associated with the brake engagement or preventing the generation or storing of brake performance data associated with the brake engagement. The control system 20 may not process or reject the relevant operating condition data of any one of steps 53, 55, 56, 57, 58, 59, 60, 61, 64, 70, 71 to generate brake performance data associated with the brake engagement. Alternatively, the control system may not perform the step 62 of calculating the brake performance or the step 63 of storing the brake performance on the memory 22. Hence brake performance data utilised for assessing the brake performance of the brake system 18 does not comprise brake performance data for a brake engagement in which a skid occurs.

Alternatively, the control system 20 may still determine a brake performance associated with the brake engagement via method 50 but will reject the brake performance. The control system 20 may store on the memory 22 brake performance data comprising a brake performance and a rejection marker associated with the brake performance if the brake performance relates to a brake engagement in which a skid occurs. The control system 20 may disregard the brake performance with an associated rejection marker during further analysis of brake performance data related to a plurality of brake engagements.

The at least one rejection condition may also be based upon the estimated rolling resistance and/or windage losses. In a similar manner to that discussed above, the control system 20 may determine at step 72 estimating the rolling resistance and/or windage losses. At step 73 the control system 20 may reject brake performance data associated with the brake engagement or prevent the generation or storing of brake performance data associated with the brake engagement if the rolling resistance exceeds a rolling resistance threshold value and/or if the windage losses exceed a windage loss threshold value. As a result, the brake performance can be assessed taking into account where the rolling resistance or windage losses may have resulted in unreliable brake performance data.

In embodiments of the present invention, wheel rotation sensors monitor the rotation of the wheels of the machine. When rotation of at least one wheel of the machine ceases during a braking event, e.g. while the machine is decelerating during the braking event, a signal is sent to the control system 20. When the control system 20 receives a signal that one of the machines wheels has locked/skid during the brake event, the control system 20 may invalidate the braking event and rejects all data associated with the braking event or prevents brake performance data associated with the braking event being generated.

In some embodiments of the present invention, upon receiving a brake lock/skid signal, the control system 20 may stop the braking event and/or implement/schedule a new brake event to monitor the brake system. For example, where the machine comprises an autonomous machine, the control system 20 may control the machine to drive to a location and/or speed for a new braking event and then control the machine to undergo the new braking event.

In some embodiments, data concerning the wheel lock/skid, such as geographical location of the machine, conditions of the braking event, operation of the brake system and/or the like may be used in subsequent braking events to avoid wheel lock/skidding.

In some embodiments, the control system 20 may determine brake performance accounting for skids, rolling resistance and/or windage losses continuously during normal operating of the machine 11 and/or during the testing of the machine 11 to populate the brake map for calculating the braking force for use in the predicted deceleration calculations.

The control system 20 may also determine brake performance by processing the brake performance data indicating the brake performance over a plurality of brake engagements. The control system 20 may identify a brake performance event based upon a change of the brake performance between at least two brake engagements and a threshold value. If a brake performance event is identified the control system 20 may provide an alert to an operator.

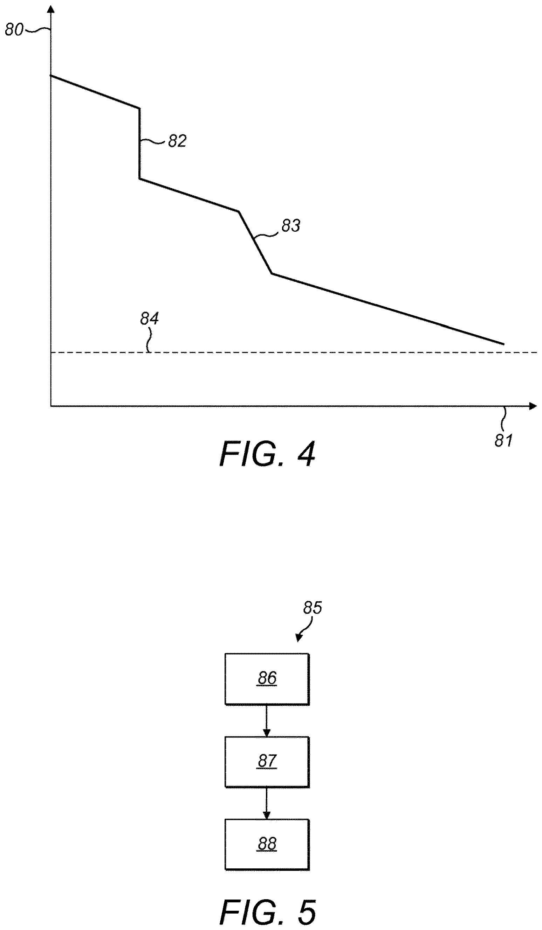

As illustrated in Figure 4, which is a graph of brake performance 80 against brake engagements over time 81, the control system 20 may identify a step brake performance event 82 based upon a step change in and/or a rate brake performance event 83 based upon a rate of change of the brake performance. The step and rate brake performance events 82, 83 may be identified when the brake performance are above the minimum brake performance threshold 84, below which an alert is provided to the operator.

The system 10 may perform the method 85 illustrated in Figure 5. At step 86 the control system 20 may process the brake performance data stored on the memory 22. The control system 20 may comprise brake performance data related to at least 2, at least 5, at least 10, at least 100 or at least 1000 brake engagements. The brake performance data may be related to brake engagements during active testing in which the machine 11 is operated under known conditions (e.g. a proving grounds type test). Alternatively or additionally, the brake performance data may be related to brake engagements during normal operation of the machine 11 and may take into account the drag forces, rolling resistance and/or windage losses as disclosed above.

At step 87 the control system 20 may identify in the brake performance data at least one step and/or rate brake performance event(s) 82, 83. The step brake performance event 82 may be identified by the control system 20 based upon a step change in brake performance between at least two brake engagements and a magnitude of the step change exceeding a fixed step change threshold value. The rate brake performance event 83 may be identified by the control system 20 based upon a rate of change of the brake performance between at least two brake engagements exceeding a rate of change threshold value.

The fixed step change threshold value and/or fixed rate of change threshold value may be stored in the memory 22 and may be indicative of a step change magnitude or rate of change magnitude above which an issue with the brake system 18 may have occurred. The rate of change threshold value may comprise a fixed rate of change threshold value. The rate of change threshold value may be a past rate of change threshold value based upon rates of change of brake performance during brake engagements prior to the brake performance event. For example, the past rate of change threshold value may be an average rate of change of brake performance over a plurality of prior brake engagements, such as at least 10 prior brake engagements, at least 100 prior brake engagements and at least 1000 prior brake engagements.

At step 88 the control system 20 may, in response to detecting at least one brake performance event, provide an alert to the operator. The control system 20 may therefore identify an issue with the brake system 18 before the brake performance falls below the minimum brake performance threshold 84.

The control system 20 may further monitor the brake performance by determining the brake delay of the brake system 18. The brake delay may be the system 10 response between the operator instructing the machine 11 to engage the brake system 18 and the brake system 18 engaging to decelerate the machine 11.

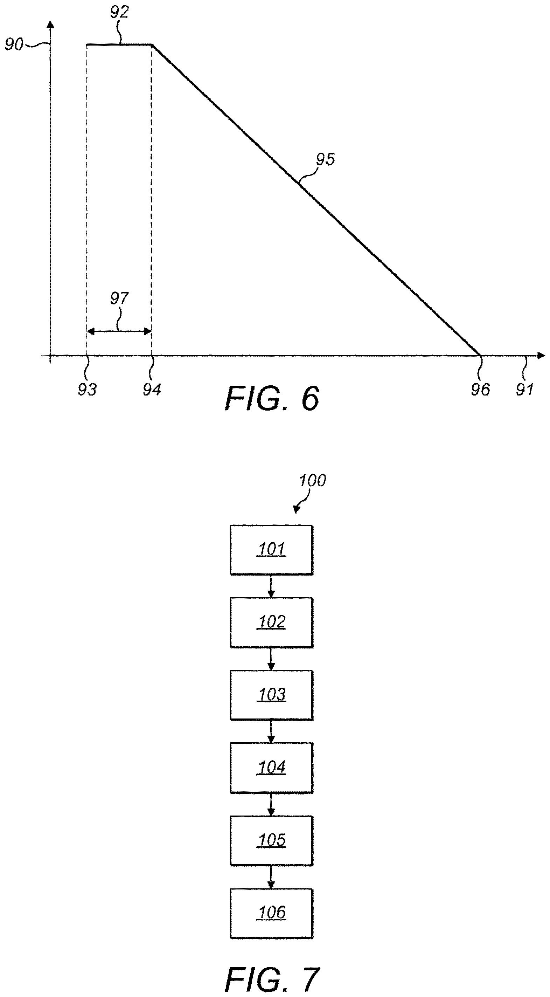

Figure 6 illustrates a graph showing the machine speed 90 against distance 91 in which the machine speed 90 remains at a constant 92 between a first time instance 93 at which an input is provided by the operator to instruct the machine 11 and a second time instance 94 at which the brake system 18 engages. The machine 11 subsequently decelerates 95 to a halt at a third time instance 96. The brake delay may be the time period between the first and second time instances 93, 94 and the effect of the brake delay on brake performance may be the distance travelled 97 by the machine 11 during the brake delay. The control system 20 may determine the brake delay and may provide an alert when the brake delay is substantially impacting the brake performance, such as by the distance travelled exceeding a threshold distance and/or the brake delay exceeds a brake delay threshold value.

The system 10 may therefore perform method 100 illustrated in Figure 7. At step 101 control system 20 may detect an input via the brake input sensor 33 indicating that the operator is instructing the machine 11 to decelerate via the brake input 30. The input may be an actuation of a brake pedal and the input may be detected based upon an output from a brake pedal position sensor. At step 102 the control system 20 may operate the brake system 18, or the brake input 30 may operate the brake system 18 directly, to engage the brake system 18 in response to the input and thereby initiate a brake engagement. At step 103 the control system 20 may detect the engagement of the brake system 18 in response to the input. The engagement of the brake system 18 may be detected based upon an output from the at least one wheel speed sensor 35, such as by the output from the at least one wheel speed sensor 35 indicating that a reduction in a wheel speed has been initiated. The brake engagement may also be detected based upon the output from a brake system pressure sensor 34 located in the brake system 18 at or close to the at least one wheel 14, such as in fluid actuating a brake calliper or piston, for detecting the application by the brake system 18 to slow the at least one wheel 14.

At step 104 the control system 20 may calculate the brake delay as the time period between the detection of the input and the detection of the engagement (e.g. the start of the engagement) of the brake system 18. The brake delay may be detected based upon a clock within the controller 21. At step 105 the control system 20 may store the brake delay on the memory 22 as brake performance data, which may be in addition to brake performance data determined as disclosed above.

The control system 20 may, at step 106, operate the machine 11 based upon the brake delay. The control system 20 may provide an alert to the operator based upon the brake delay exceeding a brake delay threshold value indicative of an issue with the brake system 18 and/or control system 20. The control system 20 may also process the brake delay with the brake performance data associated with the brake engagement and identify a brake performance issue with the brake system 18 as being related to a component causing the brake delay. For example, if the brake performance falls below a threshold value, and the brake delay exceeds the brake delay threshold value, the control system 20 may determine that the brake performance issue with the brake system 18 relates to at least one component causing the brake delay.

In a further aspect, the method may further comprise a brake test step, wherein the machine is moved to a brake check location and carrying out a brake test. The brake test may comprise at least one brake engagements carried out at the brake check location. The brake test step may comprise determining brake performance for the brake engagement or for a plurality of brake engagements performed at the brake check location. The brake performance during the one or more brake engagements may be compared to a known optimal brake performance at the brake test location. The optimal brake performance may be determined by testing.

Surface conditions of the surface over which the machine will travel during the brake test at the brake test location may be known. Surface conditions may comprise drag or friction properties of the surface, inclination of the surface etc. The surface conditions for the brake check location may be stored by or otherwise accessible to the control system. The surface at the brake test location may be configured to provide optimised conditions for braking.

The brake test step may comprise engaging the brakes while the machine is travelling at specified speed and/or using a specified braking force. The control system may be configured to carry out the brake test step automatically. The brake test step may be carried out according to a schedule, for example after a predetermined number of brake engagements or after a predetermined elapsed time since the previous test or maintenance event. The machine may comprise an automated vehicle.

In any aspect of the present invention, determining brake performance based upon a predicted deceleration may comprise rejecting generated brake performance data associated with a brake engagement or preventing the generation of brake performance data associated with the brake engagement.

In any aspect of the present invention, determining brake performance may occur during a plurality of brake engagements.

According to the invention, rejecting generated brake performance data comprises rejecting all brake performance data for a brake engagement in which a rejection condition occurs such that it is not processed for calculations relating to future or ongoing brake performance (i.e. it is excluded from the calculation of the brake performance over a plurality of brake engagements). Additionally, or alternatively, excluding brake performance data may comprise preventing generation of the brake performance data for that brake engagement.

In any aspect of the present invention, brake performance data may comprise a brake performance calculated using a predicted deceleration. In any embodiment, determining the brake performance may comprise detecting an actual deceleration of the machine during the brake engagement and determining the brake performance based upon the actual and predicted decelerations.

Industrial Application

The method 50 may thus take rolling resistance and windage losses into account when determining the brake performance of the brake system 18. The brake performance data may therefore be a more accurate representation of the state of the brake system 18 and thereby lead to more accurate servicing and earlier identification of brake performance issues. The accuracy of brake performance data may be particularly improved if the machine 11 is an off-highway machine, which may encounter higher rolling resistances due to the variation in the type of terrain 15 (e.g. soil, sand etc) and higher windage losses due to the use of heavier oil.

The method 50 may thus take into account whether skidding occurred during the brake engagement, whether the rolling resistance exceeded a rolling resistance threshold and/or whether the windage losses exceeded a windage loss threshold value. Such events may result in the associated brake performance data being unreliable. The control system 20 may enable the assessment of brake performance without such unreliable data by rejecting it. The brake performance data for a plurality of brake engagements may thus be more reliable and, by excluding such unreliable data from test data, the brake map may be a more accurate basis for determining the predicted deceleration.

The method 85 of longer term trend analysis may enable the use of the brake performance data as a prognostic rather than only for determining maintenance intervals. In particular, brake performance issues may still occur when the brake performance are above the minimum brake performance threshold 84. The identification of brake performance events 82, 83 may provide, in addition to the minimum brake performance threshold 84, further means for identifying brake performance issues.

Excluding brake performance data for a brake engagement in which a rejection condition occurs from ongoing calculation of brake performance by rejecting or preventing generation of the brake performance data for that brake engagement may reduce processing requirements for ongoing brake performance calculations.

The method 100 of determining the brake delay may result in brake performance data that can be used to further analyse any reduction in brake performance. Therefore, the brake performance data can be used by the control system 20 and operator to identify the possible cause(s) of a reduction in brake performance.

**Claims**

1. A method of monitoring brake performance of a brake system (18) of a machine (11), the method comprising:

   detecting a brake engagement for decelerating the machine (11);
   detecting a wheel lock of at least one wheel (14) of the machine (11) during the brake engagement and resulting from the brake engagement whilst the machine (11) is moving; and
   in response to the detection of the wheel lock, rejecting brake performance data associated with the brake engagement or preventing the generation of brake performance data associated with the brake engagement;
   wherein rejecting generated brake performance data comprises rejecting all brake performance data for the brake engagement such that brake performance data for the brake engagement is not processed for calculations relating to future or ongoing brake performance.

2. A method as claimed in claim 1 further comprising:

   detecting a further brake engagement for decelerating the machine (11);
   determining a brake performance of the brake system (18) during the further brake engagement.

3. A method as claimed in any one of the preceding claims wherein rejecting generated brake performance data comprises preventing the storing of the generated brake performance data on a memory (22).

4. A method as claimed in any one of the preceding claims wherein rejecting generated brake performance data comprises:

   storing on the memory (22) brake performance data comprising a brake performance and a rejection marker associated with the brake performance; and/or
   disregarding the generated brake performance during further analysis of brake performance related to a plurality of brake engagements.

5. A method as claimed in any one of the preceding claims wherein detecting the brake engagement is based upon an output from at least one of a brake pedal position sensor, a brake system pressure sensor and at least one wheel speed sensor.

6. A method as claimed in any one of the preceding claims wherein detecting the wheel lock is based upon an output from an inertial measurement unit of the machine (11) indicating that the machine (11) is decelerating and an output from at least one wheel speed sensor (35) of the machine (11) indicating that the at least one wheel (14) is not rotating.

7. A method as claimed in any one of claims 2 to 6 further comprising:

   detecting an actual deceleration of the machine (11) during the further brake engagement;
   determining a predicted deceleration of the machine (11) during the further brake engagement; and
   determining the brake performance of the further brake engagement based upon the actual and predicted decelerations;
   wherein optionally the actual deceleration is determined based upon an output from an inertial measurement unit of the machine (11).

8. A method as claimed in claim 7 wherein the predicted deceleration is determined based upon at least one operating condition of the brake system (18) measured during the further brake engagement and a brake map;
   wherein optionally the at least one operating condition of the brake system (18) comprises at least one of a brake system pressure, an inclination of the machine (11), a mass of the machine (11), a drag force of the machine (11), windage losses of the machine (11) and rolling resistance of the machine (11).

9. A method as claimed in any one of the preceding claims wherein brake performance is calculated over a plurality of brake engagements and wherein the brake performance data associated with the brake engagement in which the wheel lock is excluded from the calculation.

10. A method as claimed in any one of the preceding claims wherein the method further comprises moving the machine (11) to a brake test location and carrying out a brake test, the brake test comprising one or more brake engagements, wherein a brake performance of the brake system (18) is determined over the duration of the brake test.

11. A method as claimed in any one of the preceding claims further comprising rejecting brake performance data associated with the brake engagement or preventing the generation of brake performance data associated with the brake engagement if a rolling resistance exceeds a rolling resistance threshold value and/or if a windage loss exceeds a windage loss threshold value.

12. A method as claimed in any one of the preceding claims wherein the machine (11)comprises a plurality of wheels wherein the at least one wheel (14) comprises a wheel of the plurality of wheels; and

wherein in response to the detection of the wheel lock in the at least one wheel (14), rejecting brake performance data associated with the brake engagement or preventing the generation of brake performance data associated with the brake engagement for all wheels of the machine (11).

13. A system comprising:

a machine (11) comprising a brake system(18); and
a control system (20) for monitoring the brake performance of the brake system (18) and configured to:

detect a brake engagement for decelerating the machine (11);
detect a wheel lock of at least one wheel (14) of the machine (11) during the brake engagement and resulting from the brake engagement whilst the machine (11) is moving; and

in response to the detection of the wheel lock, rejecting brake performance data associated with the brake engagement or preventing the generation of brake performance data associated with the brake engagement; wherein rejecting generated brake performance data comprises rejecting all brake performance data for the brake engagement such that brake performance data for the brake engagement is not processed for calculations relating to future or ongoing brake performance.

14. A system as claimed in claim 13 wherein the control system (20)comprises at least one of a brake pedal position sensor, a brake system pressure sensor and at least one wheel speed sensor, further wherein the control system (20) is configured to detect the brake engagement based upon an output from at least one of the brake pedal position sensor, the brake system pressure sensor and the at least one wheel speed sensor; and optionally wherein the control system (20) comprises an inertial measurement unit and at least one wheel speed sensor (35), further wherein the control system (20) is configured to detect the wheel lock based upon an output from the inertial measurement unit indicating that the machine (11) is decelerating and an output from the at least one wheel speed sensor (35) indicating that the at least one wheel is not rotating.

15. A system as claimed in any one of claims 13 to 14 wherein:
the control system (20) is configured to brake performance over a plurality of brake engagements, wherein the brake performance data associated with the brake engagement in which the wheel lock is excluded from the calculation; and/or
wherein the control system (20) is configured to carry out a brake test at a brake test location, the brake test comprising one or more brake engagements, wherein a brake performance of the brake system (18) is determined over the duration of the brake test.

**Patentansprüche**

1. Verfahren zum Überwachen einer Bremsleistung eines Bremssystems (18) einer Maschine (11), das Verfahren umfassend:

Erfassen eines Bremseingriffs zum Verlangsamen der Maschine (11);
Erfassen einer Radblockierung mindestens eines Rads (14) der Maschine (11) während des Bremseingriffs und als Folge des Bremseingriffs, während sich die Maschine (11) bewegt; und
als Reaktion auf die Erfassung der Radblockierung, Zurückweisen von Bremsleistungsdaten, die dem Bremseingriff zugeordnet sind, oder Verhindern der Erzeugung von Bremsleistungsdaten, die dem Bremseingriff zugeordnet sind;
wobei das Zurückweisen von erzeugten Bremsleistungsdaten das Zurückweisen aller Bremsleistungsdaten für den Bremseingriff derart umfasst, dass Bremsleistungsdaten für den Bremseingriff nicht für Berechnungen in Bezug auf zukünftige oder laufende Bremsleistung verarbeitet werden.

2.  Verfahren nach Anspruch 1, ferner umfassend:

    Erfassen eines weiteren Bremseingriffs zum Verlangsamen der Maschine (11);
    Bestimmen einer Bremsleistung des Bremssystems (18) während des weiteren Bremseingriffs.

3.  Verfahren nach einem der vorstehenden Ansprüche, wobei das Zurückweisen von erzeugten Bremsleistungsdaten das Verhindern des Speicherns der erzeugten Bremsleistungsdaten in einem Speicher (22) umfasst.

4.  Verfahren nach einem der vorstehenden Ansprüche, wobei das Zurückweisen von erzeugten Bremsleistungsdaten umfasst:

    Speichern, auf dem Speicher (22), von Bremsleistungsdaten, umfassend eine Bremsleistung und eine Zurückweisungsmarkierung, die der Bremsleistung zugeordnet ist; und/oder
    Nichtbeachten der erzeugten Bremsleistung während einer weiteren Analyse von Bremsleistung, die sich auf eine Vielzahl von Bremseingriffen bezieht.

5.  Verfahren nach einem der vorstehenden Ansprüche, wobei das Erfassen des Bremseingriffs auf einer Ausgabe von mindestens einem von einem Bremspedalpositionssensor, einem Bremssystemdrucksensor und mindestens einem Raddrehzahlsensor basiert.

6.  Verfahren nach einem der vorstehenden Ansprüche, wobei das Erfassen der Radblockierung auf einer Ausgabe von einer Trägheitsmesseinheit der Maschine (11), die anzeigt, dass sich die Maschine (11) verlangsamt, und einer Ausgabe von mindestens einem Raddrehzahlsensor (35) der Maschine (11) basiert, die anzeigt, dass sich das mindestens eine Rad (14) nicht dreht.

7.  Verfahren nach einem der Ansprüche 2 bis 6, ferner umfassend:

    Erfassen einer tatsächlichen Verlangsamung der Maschine (11) während des weiteren Bremseingriffs;
    Bestimmen einer vorhergesagten Verlangsamung der Maschine (11) während des weiteren Bremseingriffs; und
    Bestimmen der Bremsleistung des weiteren Bremseingriffs basierend auf den tatsächlichen und vorhergesagten Verlangsamungen;
    wobei optional die tatsächliche Verlangsamung basierend auf einer Ausgabe von einer Trägheitsmesseinheit der Maschine (11) bestimmt wird.

8.  Verfahren nach Anspruch 7, wobei die vorhergesagte Verlangsamung basierend auf mindestens einem Betriebszustand des Bremssystems (18), der während des weiteren Bremseingriffs gemessen wird, und einem Bremskennfeld bestimmt wird;
    wobei optional der mindestens eine Betriebszustand des Bremssystems (18) mindestens eines von einem Bremssystemdruck, einer Neigung der Maschine (11), einer Masse der Maschine (11), einer Zugkraft der Maschine (11), Lüftungsverlust der Maschine (11) und einem Rollwiderstand der Maschine (11) umfasst.

9.  Verfahren nach einem der vorstehenden Ansprüche, wobei die Bremsleistung über eine Vielzahl von Bremseingriffen berechnet wird und wobei die Bremsleistungsdaten, die dem Bremseingriff zugeordnet sind, bei dem das Rad blockiert, von der Berechnung ausgeschlossen werden.

10. Verfahren nach einem der vorstehenden Ansprüche, wobei das Verfahren ferner ein Bewegen der Maschine (11) an einen Bremstestort und ein Ausführen eines Bremstests umfasst, der Bremstest umfassend einen oder mehrere Bremseingriffe, wobei eine Bremsleistung des Bremssystems (18) über die Dauer des Bremstests bestimmt wird.

11. Verfahren nach einem der vorstehenden Ansprüche, ferner umfassend das Zurückweisen von Bremsleistungsdaten, die dem Bremseneingriff zugeordnet sind, oder das Verhindern der Erzeugung von Bremsleistungsdaten, die dem Bremseneingriff zugeordnet sind, falls ein Rollwiderstand einen Rollwiderstandsschwellenwert überschreitet und/oder falls ein Lüftungsverlust einen Lüftungsverlustschwellenwert überschreitet.

12. Verfahren nach einem der vorstehenden Ansprüche, wobei die Maschine (11) eine Vielzahl von Rädern umfasst, wobei das mindestens eine Rad (14) ein Rad der Vielzahl von Rädern umfasst, und

wobei als Reaktion auf die Erfassung der Radblockierung in dem mindestens einen Rad (14), Zurückweisen von Bremsleistungsdaten, die dem Bremseingriff zugeordnet sind, oder Verhindern der Erzeugung von Bremsleistungsdaten, die dem Bremseingriff zugeordnet sind, für alle Räder der Maschine (11).

13. System, umfassend:

eine Maschine (11), umfassend ein Bremssystem (18); und
ein Steuersystem (20) zum Überwachen der Bremsleistung des Bremssystems (18) und das konfiguriert ist zum:

Erfassen eines Bremseingriffs zum Verlangsamen der Maschine (11);
Erfassen einer Radblockierung mindestens eines Rads (14) der Maschine (11) während des Bremseingriffs und als Folge des Bremseingriffs, während sich die Maschine (11) bewegt; und
als Reaktion auf die Erfassung der Radblockierung, Zurückweisen von Bremsleistungsdaten, die dem Bremseingriff zugeordnet sind, oder Verhindern der Erzeugung von Bremsleistungsdaten, die dem Bremseingriff zugeordnet sind;
wobei das Zurückweisen von erzeugten Bremsleistungsdaten das Zurückweisen aller Bremsleistungsdaten für den Bremseingriff derart umfasst, dass Bremsleistungsdaten für den Bremseingriff nicht für Berechnungen in Bezug auf zukünftige oder laufende Bremsleistung verarbeitet werden.

14. System nach Anspruch 13, wobei das Steuersystem (20) mindestens einen Bremspedalpositionssensor, einen Bremssystemdrucksensor und mindestens einen Raddrehzahlsensor umfasst, ferner wobei das Steuersystem (20) konfiguriert ist, um den Bremseingriff basierend auf einer Ausgabe von mindestens einem des Bremspedalpositionssensors, des Bremssystemdrucksensors und dem mindestens einen Raddrehzahlsensor zu erfassen; und optional wobei das Steuersystem (20) eine Trägheitsmesseinheit und mindestens einen Raddrehzahlsensor (35) umfasst, ferner wobei das Steuersystem (20) konfiguriert ist, um die Radblockierung basierend auf einer Ausgabe von der Trägheitsmesseinheit, die anzeigt, dass sich die Maschine (11) verlangsamt, und einer Ausgabe von dem mindestens einen Raddrehzahlsensor (35) zu erfassen, die anzeigt, dass sich das mindestens eine Rad nicht dreht.

15. System nach einem der Ansprüche 13 bis 14, wobei:

das Steuersystem (20) konfiguriert ist, um Bremsleistung über eine Vielzahl von Bremseingriffen hinweg zu messen, wobei die Bremsleistungsdaten, die dem Bremseingriff zugeordnet sind, bei dem das Rad blockiert, von der Berechnung ausgeschlossen werden; und/oder
wobei das Steuersystem (20) konfiguriert ist, um einen Bremstest an einem Bremstestort durchzuführen, wobei der Bremstest ein oder mehrere Bremseingriffe umfasst, wobei eine Bremsleistung des Bremssystems (18) über die Dauer des Bremstests bestimmt wird.

**Revendications**

1. Procédé de surveillance des performances de frein d'un système de frein (18) d'une machine (11), le procédé comprenant :

la détection d'un engagement de frein permettant de décélérer la machine (11) ;
la détection d'un blocage de roue d'au moins une roue (14) de la machine (11) pendant l'engagement de frein et résultant de l'engagement de frein alors que la machine (11) est en mouvement ; et
en réponse à la détection du blocage de roue, le rejet de données de performances de frein associées à l'engagement de frein ou le fait d'empêcher la génération de données de performances de frein associées à l'engagement de frein ;
dans lequel le rejet de données de performances de frein générées comprend le rejet de toutes les données de performances de frein pour l'engagement de frein de telle sorte que des données de performances de frein pour l'engagement de frein ne sont pas traitées pour des calculs liés à des performances de frein futures ou en cours.

2. Procédé selon la revendication 1 comprenant en outre :

la détection d'un engagement de frein supplémentaire permettant de décélérer la machine (11) ;
la détermination de performances de frein du système de frein (18) pendant l'engagement de frein supplémentaire.

**3.** Procédé selon l'une quelconque des revendications précédentes dans lequel le rejet de données de performances de frein générées comprend le fait d'empêcher le stockage des données de performances de frein générées sur une mémoire (22).

**4.** Procédé selon l'une quelconque des revendications précédentes dans lequel le rejet de données de performances de frein générées comprend :

le stockage sur la mémoire (22) de données de performances de frein comprenant des performances de frein et un marqueur de rejet associé aux performances de frein ; ou
le fait d'ignorer les performances de frein générées pendant une analyse supplémentaire de performances de frein liées à une pluralité d'engagements de frein.

**5.** Procédé selon l'une quelconque des revendications précédentes dans lequel la détection de l'engagement de frein est en fonction d'une sortie provenant d'au moins un capteur de position de pédale de frein, d'un capteur de pression de système de frein et d'au moins un capteur de vitesse de roue.

**6.** Procédé selon l'une quelconque des revendications précédentes dans lequel la détection du blocage de roue est en fonction d'une sortie provenant d'une unité de mesure inertielle de la machine (11) indiquant que la machine (11) décélère et d'une sortie provenant d'au moins un capteur de vitesse de roue (35) de la machine (11) indiquant que l'au moins une roue (14) ne tourne pas.

**7.** Procédé selon l'une quelconque des revendications 2 à 6 comprenant en outre :

la détection d'une décélération réelle de la machine (11) pendant l'engagement de frein supplémentaire ;
la détermination d'une décélération prédite de la machine (11) pendant l'engagement de frein supplémentaire ; et
la détermination des performances de frein de l'engagement de frein supplémentaire en fonction des décélérations réelle et prédite ;
dans lequel éventuellement la décélération réelle est déterminée en fonction d'une sortie provenant d'une unité de mesure inertielle de la machine (11).

**8.** Procédé selon la revendication 7 dans lequel la décélération prédite est déterminée en fonction d'au moins une condition de fonctionnement du système de frein (18) mesurée pendant l'engagement de frein supplémentaire et d'une carte de frein ;
dans lequel éventuellement l'au moins une condition de fonctionnement du système de frein (18) comprend au moins l'un parmi une pression de système de frein, une inclinaison de la machine (11), une masse de la machine (11), une force de résistance de la machine (11), des pertes dues au vent de la machine (11) et une résistance au roulement de la machine (11).

**9.** Procédé selon l'une quelconque des revendications précédentes dans lequel les performances de frein sont calculées sur une pluralité d'engagements de frein et dans lequel les données de performances de frein associées à l'engagement de frein dans lequel la roue se bloque sont exclues du calcul.

**10.** Procédé selon l'une quelconque des revendications précédentes dans lequel le procédé comprend en outre le mouvement de la machine (11) vers un emplacement de test de frein et la réalisation d'un test de frein, le test de frein comprenant un ou plusieurs engagements de frein, dans lequel des performances de frein du système de frein (18) sont déterminées en fonction de la durée du test de frein.

**11.** Procédé selon l'une quelconque des revendications précédentes comprenant en outre le rejet de données de performances de frein associées à l'engagement de frein ou le fait d'empêcher la génération de données de performances de frein associées à l'engagement de frein si une résistance au roulement dépasse une valeur seuil de résistance au roulement et/ou si une perte due au vent dépasse une valeur seuil de perte due au vent.

**12.** Procédé selon l'une quelconque des revendications précédentes dans lequel la machine (11) comprend une pluralité de roues dans lequel l'au moins une roue (14) comprend une roue de la pluralité de roues ; et
dans lequel en réponse à la détection du blocage de roue dans l'au moins une roue (14), le rejet de données de performances de frein associées à l'engagement de frein ou le fait d'empêcher la génération de données de performances de frein associées à l'engagement de frein pour toutes les roues de la machine (11).

13. Système, comprenant :

une machine (11) comprenant un système de frein (18) ; et
un système de commande (20) permettant de surveiller les performances de frein du système de frein (18) et configuré pour :

détecter un engagement de frein permettant de décélérer la machine (11) ;
détecter un blocage de roue d'au moins une roue (14) de la machine (11) pendant l'engagement de frein et résultant de l'engagement de frein alors que la machine (11) est en mouvement ; et
en réponse à la détection du blocage de roue, le rejet de données de performances de frein associées à l'engagement de frein ou le fait d'empêcher la génération de données de performances de frein associées à l'engagement de frein ;
dans lequel le rejet de données de performances de frein générées comprend le rejet de toutes les données de performances de frein pour l'engagement de frein de telle sorte que des données de performances de frein pour l'engagement de frein ne sont pas traitées pour des calculs liés à des performances de frein futures ou en cours.

14. Système selon la revendication 13 dans lequel le système de commande (20) comprend au moins l'un parmi un capteur de position de pédale de frein, un capteur de pression de système de frein et au moins un capteur de vitesse de roue, dans lequel en outre le système de commande (20) est configuré pour détecter l'engagement de frein en fonction d'une sortie provenant d'au moins l'un parmi le capteur de position de pédale de frein, le capteur de pression de système de frein et l'au moins un capteur de vitesse de roue ; et éventuellement dans lequel le système de commande (20) comprend une unité de mesure inertielle et au moins un capteur de vitesse de roue (35), dans lequel en outre le système de commande (20) est configuré pour détecter le blocage de roue en fonction d'une sortie provenant de l'unité de mesure inertielle indiquant que la machine (11) décélère et d'une sortie provenant de l'au moins un capteur de vitesse de roue (35) indiquant que l'au moins une roue ne tourne pas.

15. Système selon l'une quelconque des revendications 13 à 14 dans lequel :

le système de commande (20) est configuré pour des performances de frein sur une pluralité d'engagements de frein, dans lequel les données de performances de frein associées à l'engagement de frein dans lequel la roue se bloque sont exclues du calcul ; et/ou
dans lequel le système de commande (20) est configuré pour effectuer un test de frein au niveau d'un emplacement de test de frein, le test de frein comprenant un ou plusieurs engagements de frein, dans lequel des performances de frein du système de frein (18) sont déterminées sur la durée du test de frein.

*FIG. 1*

FIG. 2

FIG. 3

*FIG. 4*

*FIG. 5*

*FIG. 6*

*FIG. 7*

**EP 3 883 828 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6332354 B1
- WO 2016030699 A
- US 2018281768 A